# FASCICULE DE BREVET EUROPEEN

(11) **EP 3 732 103 B1**
(45) Date de publication et mention de la délivrance du brevet: **25.10.2023**
(21) Numéro de dépôt: 18826394.1
(22) Date de dépôt: 23.12.2018
(51) Int. Cl.: B64D 25/14, B64D 45/00, B64C 1/14

(54) **PROCEDE D'ARMEMENT/DESARMEMENT DE TOBOGGAN DE PORTE D'AVION ET ENSEMBLE DE MISE EN OEUVRE DU PROCÉDÉ**
VERFAHREN ZUR AKTIVIERUNG/DEAKTIVIERUNG EINER FLUGZEUGTÜRRUTSCHE UND VORRICHTUNG ZUR DURCHFÜHRUNG DES VERFAHRENS
METHOD FOR ARMING/DISARMING AN AIRCRAFT DOOR SLIDE AND ASSEMBLY FOR THE IMPLEMENTATION OF THE METHOD

(30) Priorité: 28.12.2017 FR 1763334
(43) Date de publication de la demande: 04.11.2020
(73) Titulaire: Latecoere, 31500 Toulouse, Occitanie (FR)
(72) Inventeur: ROMEC, Christian, 31120 SAINT LOUP CAMMAS OCCITANIE (FR)
(74) Mandataire: Junca, Eric
(86) Numéro de dépôt international: PCT/EP2018/086835
(87) Numéro de publication internationale: WO 2019/129762

(56) Documents cités:
- EP-A1- 0 743 246
- WO-A1-84/00786
- WO-A1-2010/073631
- GB-A- 505 218
- US-A- 3 634 914
- US-A- 4 715 562
- US-A1- 2011 139 934
- US-A1- 2012 146 346
- US-A1- 2016 107 755

## Description

### DOMAINE TECHNIQUE

L'invention se rapporte à un procédé d'armement / désarmement de toboggan de porte d'avion de ligne, porte passager ou de service / évacuation, en liaison avec le plancher de fuselage de l'avion, ainsi qu'à un ensemble de mise en oeuvre d'un tel procédé comportant un système d'armement désarmement.

De manière générale, dans les avions de ligne, les portes sont équipées d'un toboggan gonflable de sortie d'urgence des passagers, par exemple lors d'un atterrissage imprévu. Le plancher de la cabine passager de ces avions est en effet trop haut pour permettre aux passagers et à l'équipage de sauter de l'appareil dur le sol sans se blesser ou subir de graves traumatismes.

Les systèmes d'armement / désarmement permettent de coupler ou de désaccoupler le toboggan du plancher de fuselage, ainsi que de maintenir le toboggan attaché au fuselage pendant et après le déploiement du toboggan. Lors d'une ouverture d'urgence de porte, l'armement du toboggan et son déploiement se déroulent globalement en trois étapes :
- armement de toboggan sur la porte par solidarisation de la ralingue du toboggan sur deux ferrures écartées fixées au plancher de la cabine; l'armement est déclenchée par une commande situées sur la porte;
- ouverture d'urgence de la porte par l'actionnement de la poignée intérieure de la porte qui déclenche automatiquement son ouverture et libère le toboggan dégonflé; le toboggan étant arrimé au plancher par sa ralingue, il est extirpé de son pack depuis la porte et tombe hors de la cabine, sa chute actionnant le système de gonflement; et
- gonflage du toboggan déclenché par effet Venturi grâce à la pression d'azote ou d'air fournie par un réservoir prévu a cet effet : le toboggan se déploie, sa partie inférieure vient au contact du sol hors de l'avion, et les passagers empruntent alors le toboggan pour évacuer l'avion sans danger.

Classiquement, la ralingue du toboggan est fixée autour d'une barre métallique d'accrochage appelée également « girt bar », et le système d'armement vient ancrer cette barre dans deux ferrures du plancher de fuselage. Le désarmement du toboggan consiste à sortir la barre de ralingue de son ancrage au plancher de fuselage. Une commande d'armement / désarmement, ou « ARM/DISARM » en abrégé, correspond à deux positions d'une poignée dédiée à cette commande. Les positions de la poignée indiquent visuellement le statut de la porte. Un indicateur lumineux peut venir confirmer ce statut à tout instant.

Une commande permet d'armer ou de désarmer le toboggan et un indicateur visuel permet à l'opérateur de connaître le statut d'armement de chaque toboggan à tout instant. Ainsi, l'opérateur actionne la commande avant le décollage pour vérifier le bon fonctionnement du changement de statut de la porte, qui passe du statut DISARM - où le toboggan n'est pas libérable - au statut ARM qui permet de libérer le toboggan si nécessaire.

En position DISARM, le toboggan est attaché pour former une enveloppe tubulaire autour de la barre d'accrochage et est stocké dans un coffre fixé en bas de porte, dans le fuselage ou sous le seuil de porte selon les installations. La barre d'accrochage est maintenue parallèlement au plancher de la cabine, classiquement par des pinces en « U » muni de clips libérables formés de lames à ressort ou équivalent.

Lorsque la poignée est amenée en position ARM de la porte, le mouvement de rotation de la poignée est transformé en mouvement de translation verticale par un câblage mécanique pour verrouiller des poignées solidaires de la barre sur des ferrures intégrées sous le seuil du plancher via des mâchoires appropriées. Inversement, le décrochement de la barre est obtenu par un mécanisme de détente des mâchoires actionné par exemple par un câble relié à une poignée annexe. Un indicateur visuel, renforcé par un indicateur sonore, avertit l'opérateur que le toboggan de la porte qu'il tente d'ouvrir est armé. Ce type de solution a été décrit dans de nombreuses publications et documents de brevets, tels que par exemple US 3 634 914, US 4 715 562, EP 0743 246 ou WO 1984000786.

### ÉTAT DE LA TECHNIQUE

Des perfectionnements ont été proposés afin de prendre en compte des aspects particuliers dans le contexte périlleux d'ouverture d'urgence d'une porte de cabine. Par exemple, pour empêcher le déploiement intempestif du toboggan, il est prévu dans le document de brevet US 2011/0139934 des capteurs de présence humaine en face de la porte de cabine, en liaison avec un avertisseur d'une telle présence à proximité de la poignée interne de la porte.

Il existe également un brevet US2016107755 concernant un système de fixation du toboggan sans girt bar avec mise en oeuvre électrique ou mécanique, ce qui nécessite l'utilisation d'un type de toboggan spécifique et l'installation sur la porte d'un système de gestion électrique ou mécanique autonome. De plus cette solution, qui apporte une alternative à l'utilisation d'une barre d'accrochage, entraîne une augmentation de masse et une complexité - et donc une fragilité - non négligeables du mécanisme.

Ce système de fixation sans barre d'accrochage génère donc un encombrement, une augmentation de masse et de complexité du mécanisme. De manière générale, les mécanismes d'ARM/DISARM connus restent fragiles car tributaires de la présence de petits objets ou résidus (gravier, terre, pièces de monnaie, poussière, ...) qui peuvent tomber dans le mécanisme. Le mécanisme est alors bloqué par ces déchets et objets environnementaux liés par la crasse accumulée en bas de porte, ce qui génère des non-déploiements de toboggan en urgence.

Lorsque le statut d'armement n'est pas opérationnel, des mesures exceptionnelles et de longue durée pour remettre le mécanisme en état de marche sont déployées. De plus, des difficultés de désarmement peuvent également apparaître en présence de givre déposé sur ce mécanisme.

### EXPOSÉ DE L'INVENTION

L'invention vise à s'affranchir de ces inconvénients tout en mettant en oeuvre un toboggan standard et un mécanisme simplifié et de masse réduite. Pour ce faire, elle utilise des accrochages montés de manière élastique sur la porte, reliés par une barre d'accrochage et actionnés par des mécanismes d'entraînement. Ces accrochages viennent s'agripper de manière réversible à des ancrages fixés sur le seuil de porte, les mécanismes d'entraînement restant totalement du côté de la porte, et donc bien protégés des agressions environnementales.

A ce titre, la présente invention a pour objet un procédé d'armement / désarmement de toboggan d'une porte d'avion en liaison avec un plancher de cabine de l'avion, dans lequel - en mode armement dit ARM - la porte est descendue en position fermée pour engager des premières parties de connexion de deux mécanismes libérables sur des deuxièmes parties de connexion de ces mécanismes de connexion libérable à centrage élastique, respectivement solidaires de la porte et du plancher de cabine; les premières parties sont verrouillées sur les deuxièmes parties des mécanismes par un désalignement d'empreintes respectives suite à un entraînement en rotation simultanée des premières parties de connexion par une translation selon une cinématique de blocage déclenchée par une commande unique via une barre d'accrochage couplée par des moyens d'attache à des grappins de verrouillage/ déverrouillage des premières parties de connexion et actionnée par une source d'énergie, d'autres empreintes des premières parties étant alors alignées de manière libérable; en cas de sortie d'urgence le toboggan uniquement accroché à chaque mécanisme est déroulé et gonflé; et - en mode désarmement dit DISARM - lesdits mécanismes sont déverrouillés par un entraînement mécanique de cinématique inverse en translation et rotation qui déverrouille les premières parties des deuxièmes parties par un alignement d'empreintes respectives et verrouille les premières parties à la porte par un désalignement des autres empreintes, puis à lever la porte pour désaccoupler les parties des mécanismes avant de procéder à son ouverture.

La source d'énergie est de préférence mécanique, mais elle peut être alternativement électrique avec un actionnement motorisé. Par ailleurs, la commande unique peut être mise en oeuvre par translation, qui entraîne une rotation simultanée au niveau de chaque première partie de connexion des mécanismes, ou par rotation au niveau d'une seule des premières parties de connexion.

Selon des modes de mise en oeuvre particuliers :
- les deuxièmes parties de connexion solidaires du plancher de cabine forment des avancées émergeantes à partir du plancher ;
- les parties de connexion sont alignées lors de la descente de la porte par une fixation des premières parties de connexion solidaires de la porte via le centrage élastique ;
- la cinématique de blocage se compose d'un entraînement en rotation simultanée au niveau de chaque première partie de connexion induit par un entraînement en translation de la commande unique ;
- l'entrainement en rotation au niveau d'une des premières parties de connexion est effectuée par une translation actionnée par la rotation au niveau de l'autre première partie de connexion ayant fonction de commande unique ;
- l'entraînement en rotation fait pivoter partiellement chaque première partie de connexion solidaire de la porte entre deux positions angulaires, une position de verrouillage dans la deuxième partie selon une conformation bloquante, et une position libérable dans laquelle les première et deuxième parties de chaque mécanisme de connexion présentent des conformations complémentaires ;
- les positions angulaires des premières parties des mécanismes de connexion et de la commande peuvent être détectées pour confirmer l'état d'armement/désarmement du toboggan.

L'invention se rapporte également à un ensemble de mise en oeuvre du procédé ci-dessus, comportant un système d'armement / désarmement de toboggan de porte d'avion, une porte d'avion équipée d'un tel système, un plancher de cabine d'avion correspondant et deux mécanismes de connexion libérables en liaison avec la porte et le plancher de cabine de l'avion. Chaque mécanisme comporte un connecteur libérable solidaire de la porte, s'étendant perpendiculairement au plancher de chaque côté d'un bas de porte, et une ferrure d'ancrage fixée sur le plancher de cabine. Chaque connecteur est équipé d'un centreur élastique ainsi que d'un grappin de verrouillage/déverrouillage sur la ferrure d'ancrage correspondante, les connecteurs étant reliés par une barre d'accrochage à partir de chaque grappin qui présente des moyens d'attache de la barre d'accrochage. Chaque grappin étant mobile en rotation, l'un des grappins peut être entraîné par une commande unique qui entraîne en rotation l'autre grappin via la barre d'accrochage. Le système comporte également une source d'énergie pour déclencher la commande unique de chaque grappin entre deux positions angulaires :
- une position de verrouillage angulaire dans laquelle chaque grappin et la ferrure d'ancrage correspondante présentent des empreintes en conformation bloquante, et
- une position angulaire libérable dans laquelle chaque grappin et la ferrure d'ancrage présentent des empreintes en conformation complémentaire non bloquante.

Selon des modes de réalisation préférés :
- chaque grappin présente deux empreintes femelles, une empreinte supérieure pouvant être couplée à une empreinte mâle d'un embout du connecteur relié à la porte, et une empreinte inférieure pouvant être connectée à une empreinte mâle de la ferrure d'ancrage correspondante;
- la commande unique est constituée par la barre d'accrochage ou par l'un des grappins couplé mécaniquement à une source d'énergie, mécanique ou électrique;
- chaque connecteur comporte un tube monté perpendiculairement au plancher de cabine dans un support de fixation sur la porte, le tube est monté dans le support à travers un centreur élastique d'absorption des désalignements entre les parties, notamment lors de déplacements relatifs en vol entre la porte et le fuselage ou lors de leur connexion pendant la descente de la porte en position fermée;
- le tube est monté dans le support à travers un centreur élastique apte à absorber les désalignements entre les connecteurs et les ferrures d'ancrage, notamment lors de déplacements relatifs en vol entre la porte et le fuselage ou lors de leur connexion pendant la descente de la porte en position fermée;
- des capteurs de position sont montés sur une collerette prolongeant le tube afin de déterminer la position angulaire des premières parties de connexion et de la commande pour en déduire la position des grappins ainsi que l'état d'armement/désarmement du toboggan ;
- chaque grappin présente une branche servant de moyens d'attache de la barre d'accrochage;
- une tirette forme une cible de chaque grappin apte à être manoeuvrée pour armer ou désarmer le toboggan en cas de nécessité, en particulier en cas de panne du moteur électrique servant de source d'énergie;
- chaque mécanisme possède un système bistable, afin de sécuriser les deux positions ARMED/DISARMED ;
- un indicateur lumineux informe l'opérateur du statut d'armement/désarmement de la porte.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue frontale partielle d'une porte d'avion - à partir de l'intérieur de l'avion - équipée d'un exemple de système d'armement / désarmement selon l'invention ;
- la figure 2, une vue en perspective d'un exemple de système d'armement / désarmement selon la figure 1 ;
- la figure 3, une vue éclatée de la connexion entre un tube de liaison à la porte et la ferrure d'ancrage du plancher de porte, et
- les figures 4A et 4B, des vues en perspective et en coupe du mécanisme de connexion libérable sur une ferrure d'ancrage du plancher de porte.

### DESCRIPTION DETAILLÉE

Dans tout le texte, les termes « supérieur » et « inférieur » d'une part, « vertical » et « horizontal » d'autre part, se rapportent respectivement à des localisations d'éléments ou de parties d'éléments positionnés selon des localisations relatives standard, et à des étendues perpendiculaires ou parallèles au niveau de la surface d'atterrissage ou d'amerrissage au sens large (sol ou eau) considérée comme un plan horizontal de référence.

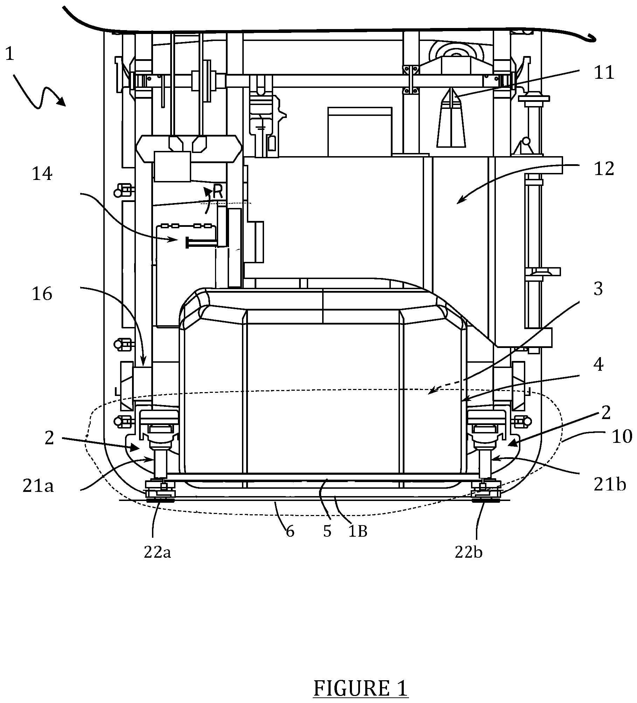

En référence à la figure 1, une vue frontale partielle de la partie inférieure de porte d'avion 1 - à partir de l'intérieur de l'avion - équipée d'un exemple de système d'armement / désarmement 10 selon l'invention est illustrée. Cette porte 1 est la porte d'entrée/sortie avant habituelle des passagers. Elle est équipée notamment d'une poignée de levage / descente 11, d'un bras 12 d'ouverture de la porte 1 afin de permettre l'accès ou la sortie des passagers et de deux mécanismes de connexion libérables 2.

Chaque mécanisme de connexion libérable 2 permet d'utiliser un toboggan 3 stocké dans le coffre 4 formé dans la partie inférieure de porte 1 dans les cas d'urgence qui nécessitent l'évacuation des occupants de l'avion. Le fonctionnement de ces mécanismes 2 est déclenché par la rotation (flèche R) d'une poignée de commande 14. Des diodes lumineuses (non illustrées) ou des boutons rétro-éclairés peuvent être avantageusement disposés sur la porte 1 signaler visuellement l'état respectivement armé ou désarmé du système d'armement 10.

La cinématique d'armement se compose d'un entraînement en rotation combinée des mécanismes 2 via une barre d'accrochage 5, cet entraînement étant induit classiquement à partir d'un entrainement en translation piloté par la poignée 14 via des pignons et/ou bielles de liaison rotation / translation, la barre d'accrochage 5 ainsi translatée garantissant la synchronisation angulaire des mécanismes 2.

Le système 10 est équipé de deux mécanismes 2 qui comportent un connecteur libérable 21a et 21b s'étendant perpendiculairement au plancher 6, de chaque côté d'un bas de porte 1B. Ces connecteurs 21a, 21b sont couplés à la barre d'accrochage 5 et fixés à une structure de renfort 16 de la porte 1. Chaque mécanisme 2 comporte également une ferrure d'ancrage 22a, 22b en liaison libérable avec le connecteur 21a, 21b. Ces ferrures d'ancrage 22a et 22b sont fixées au plancher de cabine 6. Sur la figure 1, la porte 1 est descendue en positon fermée et les connecteurs 21a et 21b sont engagés sur les ferrures 22a et 22b. Dans les figures où un seul connecteur 21a ou une seule ferrure 22a est représenté, la description vaut pour l'autre connecteur 21b ou l'autre ferrure 22b.

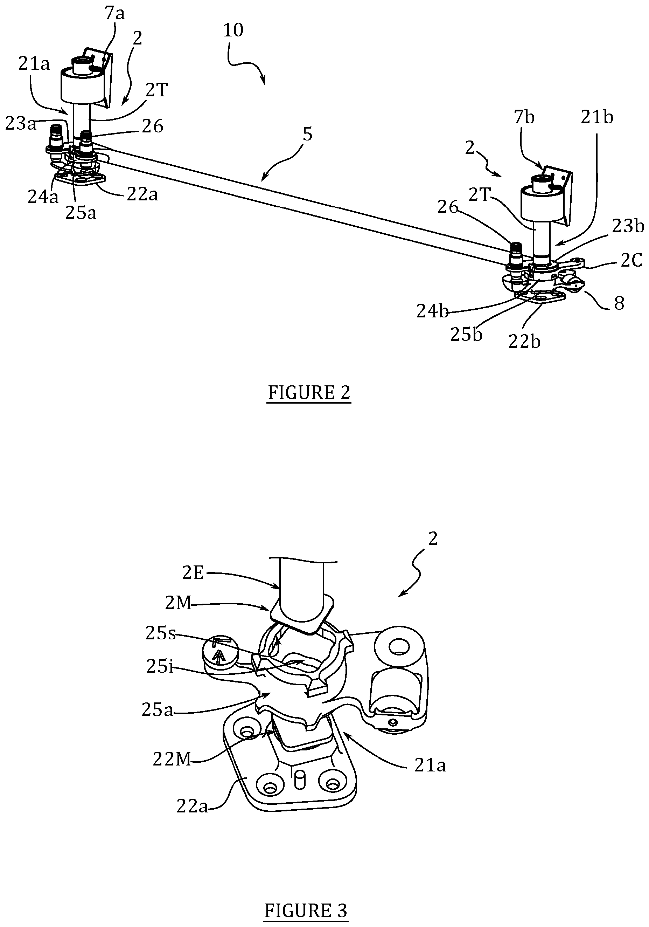

La figure 2 illustre une vue en perspective d'un exemple de système d'armement / désarmement 10 selon la figure 1. Ce système 10 comporte les deux mécanismes de connexion libérables 2 aux extrémités de la barre d'accrochage 5. Chaque mécanisme 2 comporte le connecteur 21a, 21b, solidaire de la porte 1 (cf. figure 1) via un support de fixation 7a, 7b, et lié de manière libérable avec la ferrure d'ancrage correspondante 22a, 22b, comme illustré plus en détail ci-dessous.

La barre d'accrochage de toboggan 5 est couplée à chaque grappin 25a, 25b via une branche, un crochet ou autre moyen de prise. Avantageusement, cette barre 5 peut être réglable en longueur. Alternativement, les ferrures d'ancrage 22a, 22b peuvent être réglables en position afin de rendre la barre 5 non réglable.

Vu extérieurement, chaque connecteur 21a, 21b se compose d'un tube 2T de liaison à la porte 1 (cf. figure 1), prolongé successivement vers la ferrure d'ancrage 22a, 22b par une collerette 23a, 23b, une bague d'entraînement 24a, 24b munie d'une tirette 2C, et un grappin 25a, 25b.

Chaque collerette 23a, 23b est équipée de capteurs 26 qui s'étendent entre les collerettes 23a, 23b et les grappins 25a, 25b pour indiquer l'état ARM ou DISARM du toboggan à partir de positions angulaires de grappin 25a, 25b ou de la tirette 2C. L'un des grappins 25a, 25b, ou les deux alternativement, possède de préférence un système bistable 8, par exemple de type solénoïde, afin de sécuriser les positions correspondant aux états ARM et DISARM. La tirette 2C sert de cible aux capteurs 26.

En référence à la vue éclatée de la figure 3, l'articulation d'un des mécanismes de connexion libérables 2 entre un embout tubulaire 2E interne au tube de liaison 2T (cf. figure 2) du connecteur 21a, le grappin 25a et la ferrure d'ancrage de plancher de porte 22a apparaît de manière détaillée, en position angulaire ARM sur cette figure. L'embout tubulaire 2E présente une empreinte carrée mâle 2M qui vient se loger dans l'empreinte carrée femelle supérieure 25s du grappin 25a, alors que l'empreinte carrée mâle 22M de la ferrure d'ancrage 22a vient bloquer l'empreinte carrée femelle inférieure 25i du grappin 25a.

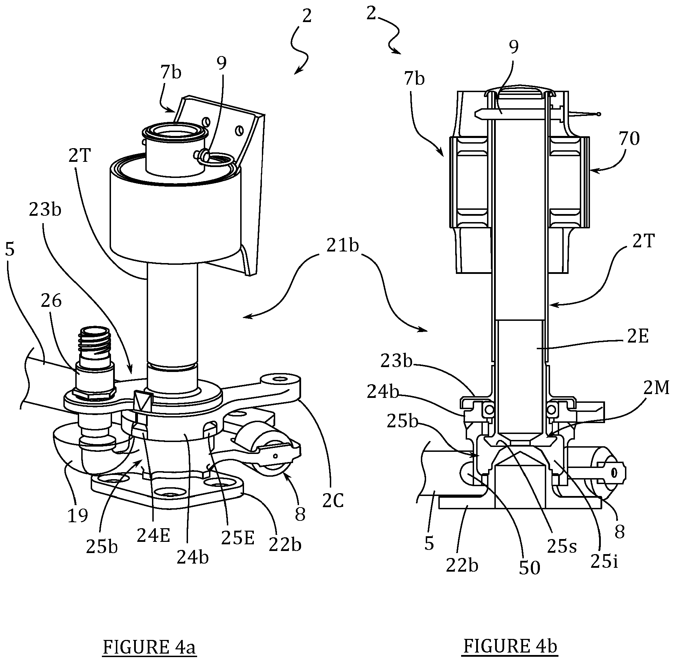

Les figures 4A et 4B illustrent, respectivement en vue en perspective et en coupe l'un des mécanismes de connexion libérable 2 sur une ferrure d'ancrage 22b du plancher de porte 6 (cf. figure 1). Sur ces figures 4A et 4B, on retrouve - tels que décrits précédemment en référence à la figure 2 - le connecteur 21b monté sur le support de fixation 7b et lié de manière libérable avec la ferrure d'ancrage 22b. Le connecteur 21b se compose du tube 2T de liaison à la porte 1 (cf. figure 1) prolongé successivement par la collerette 23b, la bague d'entraînement 24b munie de la tirette 2C, et le grappin 25b. Le grappin 25b et la bague d'entraînement 24b sont couplés dans l'exemple illustré par ergots 25E et encoches 24E.

La collerette 23b est équipée du capteur 26 qui réalise une double mesure au niveau de la collerette 23b et du grappin 25b, pour indiquer l'état ARM ou DISARM du toboggan à partir de la position angulaire du grappin 25b et/ou de la tirette 2C. Le grappin 25b possède le système bistable 8 de sécurisation des positions correspondant aux états ARM et DISARM.

Le tube 2T est monté dans le support 7b à travers un centreur 70 en matériau élastique afin de compenser les défauts d'alignement entre le support 7b et la ferrure d'ancrage 22b, notamment lors de déplacements relatifs en vol entre la porte et le fuselage ou lors de leur connexion pendant la descente de la porte en position fermée. Les centreurs 70 peuvent être rattachés sur le « pack toboggan » ou sur la porte. Ainsi, le système est auto-centreur et permet la suppression du réglage de l'ancrage sur le fuselage. La souplesse des centreurs 70 permet de ne pas utiliser de tolérancement précis sur l'ensemble du système.

De plus, le tube 2T est maintenu en extrémité au-dessus du support 7b par une broche 9 qui le traverse de part en part. En cas de transfert du toboggan, la broche 9 est retirée, libérant ainsi le tube 2T en translation. Le tube est remonté dans son support 7b, le grappin 25b restant solidaire de la ferrure d'ancrage 22b. Les grappins 25b (25a) peuvent être actionnés en rotation manuellement pour les déverrouiller des ferrures d'ancrage 22b (22a). L'ensemble grappins 25a, 25b, barre 5 et toboggan 3 est alors retiré et déplacé vers une autre porte.

Comme il apparaît sur la vue en coupe de la figure 4B, le tube 2T est prolongé par l'embout 2E dont l'empreinte carrée mâle 2M est logé dans l'empreinte carrée femelle supérieure 25s du grappin 25b. De même, la ferrure d'ancrage 22b vient s'intégrer dans l'empreinte femelle inférieure 25i du grappin 25b. Par ailleurs, la barre d'accrochage 5 est montée sur le grappin 25b de manière réglable grâce à des ouvertures 50 dans une branche (masquée sur la figure) du grappin 25b.

La cinématique de blocage du toboggan 3 par le système 10 (cf. figure 1) se déroule globalement (cf. figures 2, 3 et 4B) par entraînement en rotation au niveau du grappin 25b à partir de la commande qui induit la rotation de l'autre grappin 25a par un entraînement en translation via la barre d'accrochage 5. La cinématique est ainsi implémentée par une commande unique pilotée mécaniquement dans cet exemple par la rotation de la poignée 14 (cf. figure 1). En cas de nécessité, la tirette 2C peut être manoeuvrée pour armer ou désarmer le toboggan.

L'entrainement en rotation du grappin 25a se fait par la mise en translation de la barre d'accrochage 5 actionnée par la rotation du grappin 25b. L'entraînement en rotation fait pivoter les grappins 25a, 25b entre deux positions angulaires, une position de verrouillage dans laquelle chaque grappin 25a, 25b est agencé dans les logements d'empreintes des autres parties, embouts 2E et ferrures d'ancrage, 22a, 22b selon une conformation bloquante et une position libérable dans laquelle chaque grappin 25a, 25b et les logements, des empreintes carrées dans l'exemple, présentent des conformations complémentaires. Le verrouillage de chaque grappin 25a, 25b en position ARM ou DISARM est donc réalisé par la rotation d'une pièce de commande. Ces rotations alignent ou désalignent les empreintes 22M, 25i, 25s et 2M respectivement des ferrures d'ancrages 22a, des grappins 25a, 25b et embouts 2E correspondant aux positions de verrouillage (ARM) et déverrouillage (DESARM) du toboggan 3.

Plus précisément, la porte 1 en se fermant a un mouvement de descente. Ce mouvement permet l'engagement et le centrage des grappins 25a, 25b sur les ferrures d'ancrage 22a, 22b. La commande d'armement actionne la rotation d'un des grappins 25a, 25b. Les empreintes 25s et 2M respectivement des grappins 25a, 25b et des embouts 2E se retrouvent alors alignées. Les grappins 25a, 25b sont alors verrouillés sur les ferrures d'ancrage 22a, 22b et les empreintes 2M déverrouillées des grappins 25a, 25b.

En cas d'ouverture d'urgence (ouverture en position ARM), la montée de la porte 1 désolidarise les empreintes d'embout 2M et des grappins respectif 25a, 25b qui, verrouillés sur la ferrure d'ancrage 22a, 22b restent en place. La barre d'accrochage 5 du toboggan 3 se retrouve ainsi retenue par les ancrages, actionnant ainsi la séquence de déploiement du toboggan.

La commande de désarmement actionne la rotation inverse de la commande. Les empreintes 25i et 22M respectivement des grappins 25a, 25b et des ferrures d'ancrage 22a, 22b se retrouvent alors alignées. Le grappin 25a, 25b est alors déverrouillé de la ferrure d'ancrage 22a, 22b. Les empreintes 25s, 2M du grappin 25a, 25b et de l'embout 2E se retrouvent alors désalignées. L'embout 2E est alors verrouillé sur le grappin correspondant 25a, 25b. En cas d'ouverture normale (ouverture en position DISARM), la montée de la porte lève l'ensemble embout 2E et grappin correspondant 25a, 25b. La barre d'accrochage 5 du toboggan 3 reste sur la porte 1, le toboggan 3 ne se déploie donc pas lors de l'ouverture de la porte 1.

L'ensemble décrit ci-dessus simplifie le fonctionnement par une réduction du nombre de pièces en mouvement et une simplification de la géométrie des pièces le composant. La masse de l'ensemble s'en trouve ainsi réduite. La simplification de l'ensemble a également permis sa réduction d'encombrement et donc l'implantation de toboggan plus volumineux, adapté à l'évolution de la réglementation. L'ensemble présenté permet l'utilisation d'un toboggan standard.

Par rapport aux versions traditionnelles à barre d'accrochage, la bielle de jonction entre des accrochages avant et arrière est supprimée. De plus, l'ensemble présenté est avantageusement protégé de l'écoulement de l'eau par une coupelle couvrante 19 (cf. figure 4a), ce qui diminue fortement l'impact de l' « icing » (gel se propageant à l'intérieur de la porte). De plus, l'ancrage est nettement moins sensible aux accumulations de déchets divers. La forme de l'ancrage n'est pas agressive pour les passagers, en cas normal ou d'urgence. Le système est auto-centreur et permet la suppression du réglage de l'ancrage sur le fuselage.

L'invention n'est pas limitée aux exemples de réalisation décrits et représentés. Selon le besoin spécifique, la commande peut être mécanique ou électrique. Le nombre de capteurs et nombre d'indicateurs peuvent être réduits. Un deuxième système bistable peut être ajouté à l'autre extrémité de la barre d'accrochage.

La forme des empreintes (carré dans l'exemple) peut être adapté pour réduire l'angle nécessaire à la rotation pour désengagement des empreintes (pentagonale, hexagonale, heptagonale, octogonale, etc.).

## Revendications

1. Procédé d'armement / désarmement de toboggan (3) d'une porte d'avion (1) en liaison avec un plancher de cabine (6) de l'avion, dans lequel - en mode armement dit ARM - la porte (1) est descendue en position fermée pour engager des premières parties de connexion (21a, 21b) de deux mécanismes libérables (2) à centrage élastique (70) sur des deuxièmes parties de connexion (22a, 22b) de ces mécanismes (2), respectivement solidaires de la porte (1) et du plancher de cabine (6); les premières parties (21a, 21b) sont verrouillées sur les deuxièmes parties (22a, 22b) des mécanismes (2) par un désalignement d'empreintes respectives (25i, 22M) suite à un entraînement en rotation simultanée des premières parties de connexion (21a, 21b) par une translation selon une cinématique de blocage déclenchée par une commande unique via une barre d'accrochage (5) couplée par des moyens d'attache à des grappins de verrouillage/déverrouillage (25a, 25b) des premières parties de connexion (21a, 21b) et actionnée par une source d'énergie (14), d'autres empreintes (2M, 25s) des premières parties (21a, 21b) étant alors alignées de manière libérable; en cas de sortie d'urgence le toboggan (3) uniquement accroché à chaque mécanisme (2) est déroulé et gonflé ; et - en mode désarmement dit DISARM - lesdits mécanismes (2) sont déverrouillés par un entraînement mécanique (14, 5; 25a, 25b) de cinématique inverse en translation et rotation qui déverrouille les premières parties (21a, 21b) des deuxièmes parties (22a, 22b) par un alignement d'empreintes respectives (25i, 22M) et verrouille les premières parties (21a, 21b) à la porte (1) par un désalignement des autres empreintes (2M, 25s), puis à lever la porte (1) pour désaccoupler les parties (21a, 21b; 22a, 22b) des mécanismes (2) avant de procéder à son ouverture.

2. Procédé d'armement / désarmement selon la revendication 1, dans lequel les deuxièmes parties de connexion (22a, 22b) solidaires du plancher de cabine (6) forment des avancées émergeant à partir du plancher (6).

3. Procédé d'armement / désarmement selon l'une des revendications 1 ou 2, dans lequel les parties de connexion (21a, 21b; 22a, 22b) sont alignées lors de la descente de la porte (1) par une fixation (7a, 7b) des premières parties de connexion (21a, 21b) solidaires de la porte (1) via le centrage élastique (70).

4. Procédé d'armement / désarmement selon l'une quelconque des revendications précédentes, dans lequel la cinématique de blocage se compose d'un entraînement en rotation simultanée au niveau (25a, 25b) de chaque première partie de connexion (21a, 21b) induit par un entraînement en translation de la commande unique (5, 25a, 25b).

5. Procédé d'armement / désarmement selon l'une des revendications précédentes, dans lequel l'entrainement en rotation au niveau (25a, 25b) d'une des premières parties de connexion (21a, 21b) est effectuée par une translation actionnée par la rotation au niveau (25b, 25a) de l'autre première partie de connexion (21b, 21a) ayant fonction de commande unique.

6. Procédé d'armement / désarmement selon l'une des revendications précédentes, dans lequel l'entraînement en rotation fait pivoter partiellement chaque première partie de connexion (21a, 21b) solidaire de la porte (1) entre deux positions angulaires, une position de verrouillage dans la deuxième partie (22a, 22b) selon une conformation bloquante, et une position libérable dans laquelle les première (21a, 21b) et deuxième (22a, 22b) parties de chaque mécanisme de connexion (2) présentent des conformations complémentaires.

7. Procédé d'armement / désarmement selon l'une des revendications précédentes, les positions angulaires des premières parties de mécanismes de connexion (21a, 21b) et de la commande unique (5; 25a, 25b) sont détectées pour confirmer l'état d'armement/désarmement du toboggan (3).

8. Ensemble de mise en oeuvre du procédé selon l'une quelconque des revendications précédentes, comportant un système d'armement / désarmement de toboggan (3) de porte d'avion (1), une porte d'avion équipée d'un tel système, un plancher de cabine d'avion correspondant et deux mécanismes de connexion libérables (2) en liaison avec la porte (1) et le plancher (6), dans lequel chaque mécanisme (2) comporte un connecteur libérable (21a, 21b) solidaire de la porte (1), s'étendant perpendiculairement au plancher (6) de chaque côté d'un bas de porte (1B), et une ferrure d'ancrage (22a, 22b) fixée sur le plancher de cabine (6), dans lequel chaque connecteur (21a, 21b) est équipé d'un centreur élastique (70) ainsi que d'un grappin de verrouillage/déverrouillage (25a, 25b) sur la ferrure d'ancrage correspondante (22a, 22b), les connecteurs (21a, 21b) étant reliés par une barre d'accrochage (5) à partir de chaque grappin (25a, 25b) qui présente des moyens d'attache de la barre d'accrochage (5), et dans lequel chaque grappin (25a, 25b) étant mobile en rotation, l'un des grappins (25a, 25b) peut être entraînée par une commande unique (5; 25a, 25b) qui entraîne en rotation l'autre grappin (25a, 25b) via la barre d'accrochage (5), le système comportant également une source d'énergie (14) pour déclencher la commande unique (5; 25a, 25b) de chaque grappin (25a, 25b) entre deux positions angulaires :
- une position de verrouillage angulaire dans laquelle chaque grappin (25a, 25b) et la ferrure d'ancrage correspondante (22a, 22b) présentent des empreintes (25i, 22M) en conformation bloquante, et
- une position angulaire libérable dans laquelle chaque grappin (25a, 25b) et la ferrure d'ancrage (22a, 22b) présentent des empreintes (25i, 22M) en conformation complémentaire non bloquante.

9. Ensemble selon la revendication précédente, dans lequel chaque grappin (25a, 25b) présente deux empreintes femelles, une empreinte supérieure (25s) pouvant être couplée à une empreinte mâle (2M) d'un embout (2E) du connecteur (2) relié à la porte (1), et une empreinte inférieure (25i) pouvant être connectée à une empreinte mâle (22M) de la ferrure d'ancrage correspondante (22a, 22b).

10. Ensemble selon la revendication 8, dans lequel la commande unique est constituée par la barre d'accrochage (5) couplée mécaniquement à une source d'énergie (14).

11. Ensemble selon la revendication 8, dans lequel la commande unique est constituée par l'un des grappins (25a, 25b) des connecteurs libérables (21a, 21b) couplé mécaniquement à une source d'énergie (14).

12. Ensemble selon l'une quelconque des revendications 8 à 11, dans lequel chaque connecteur (21a, 21b) comporte un tube (2T) monté perpendiculairement au plancher de cabine (6) dans un support de fixation (7a, 7b) sur la porte (1), le tube (2T) étant monté dans le support (7a, 7b) à travers le centreur élastique (70) d'absorption des désalignements entre les connecteurs (21a, 21b) et les ferrures d'ancrage (22a, 22b).

13. Ensemble selon la revendication précédente, dans lequel le tube (2T) est monté dans le support (7a, 7b) à travers le centreur élastique (70) apte à absorber les désalignements entre les connecteurs (21a, 21b) et les ferrures d'ancrage (22a, 22b).

14. Ensemble selon la revendication précédente, dans lequel des capteurs de position (26) sont montés sur une collerette (23a, 23b) prolongeant le tube (2T) afin de déterminer la position angulaire des connecteurs (21a, 21b) et de la commande (5) pour en déduire la position des grappins (25a, 25b) ainsi que l'état d'armement/désarmement du toboggan (3).

15. Ensemble selon l'une quelconque des revendications 8 à 14, dans lequel chaque grappin (25a, 25b) présente une branche servant de moyens d'attache de la barre d'accrochage (5).

16. Ensemble selon l'une quelconque des revendications 8 à 15, dans lequel une tirette (2C) forme une cible de chaque grappin (25a, 25b) apte à être manoeuvrée pour armer ou désarmer le toboggan (3) en cas de nécessité.

17. Ensemble selon l'une quelconque des revendications 9 à 12, dans lequel chaque mécanisme (2) possède un système bistable (8) afin de sécuriser les deux positions ARMED/DISARMED.

18. Ensemble selon l'une quelconque des revendications 9 à 13, dans lequel un indicateur lumineux informe l'opérateur du statut d'armement/désarmement de la porte.

## Patentansprüche

1. Verfahren zum Aktivieren/Deaktivieren der Rutsche (3) einer Flugzeugtür (1), die mit einem Kabinenboden (6) des Flugzeugs in Verbindung steht, wobei - in einem als ARM bezeichneten Aktivierungsmodus - die Tür (1) in die geschlossene Position abgesenkt ist, damit erste Verbindungsteile (21a, 21b) zweier lösbarer Mechanismen (2) mit elastischer Zentrierung (70) mit zweiten Verbindungsteilen (22a, 22b) dieser Mechanismen (2), die fest mit der Tür (1) bzw. mit dem Kabinenboden (6) verbunden sind, in Eingriff stehen; wobei die ersten Teile (21a, 21b) an den zweiten Teilen (22a, 22b) der Mechanismen (2) durch einen Versatz jeweiliger Prägungen (25i, 22M) infolge einer gleichzeitigen Drehung der ersten Verbindungsteile (21a, 21b) durch eine Translation gemäß einer Blockierungskinematik verriegelt werden, die durch einen Einzelsteuerung über eine Kopplungsstange (5) ausgelöst wird, die durch Befestigungsmittel mit Verriegelungs- /Entriegelungsgreifern (25a, 25b) der ersten Verbindungsteile (21a, 21b) gekoppelt ist und durch eine Energiequelle (14) betätigt wird, wobei andere Prägungen (2M, 25s) der ersten Teile (21a, 21b) dann lösbar ausgerichtet sind;
wobei im Fall eines Notausstiegs die lediglich an jedem Mechanismus (2) hängende Rutsche (3) ausgerollt und aufgeblasen wird und
wobei - in einem als DISARM bezeichneten Deaktivierungsmodus - die Mechanismen (2) durch einen mechanischen Antrieb (14, 5; 25a, 25b) mit umgekehrter Kinematik und Drehung entriegelt werden, der die ersten Teile (21a, 21b) durch eine Ausrichtung jeweiliger Prägungen (25i, 22M) von den zweiten Teilen (22a, 22b) entriegelt und die ersten Teile (21a, 21b) an der Tür (1) durch einen Versatz der anderen Prägungen (2M, 25s) verriegelt und anschließend die Tür (1) anhebt, um die Teile (21a, 21b; 22a, 22b) von den Mechanismen (2) zu trennen, bevor sie geöffnet wird.

2. Aktivierungs-/Deaktivierungsverfahren nach Anspruch 1, wobei die fest mit dem Kabinenboden (6) verbundenen zweiten Verbindungsteile (22a, 22b) Vorsprünge bilden, die aus dem Boden (6) hervorstehen.

3. Aktivierungs-/Deaktivierungsverfahren nach einem der Ansprüche 1 oder 2, wobei die Verbindungsteile (21a, 21b; 22a, 22b) beim Absenken der Tür (1) durch eine Fixierung (7a, 7b) der fest mit der Tür (1) verbundenen ersten Verbindungsteile (21a, 21b) über die elastische Zentrierung (70) ausgerichtet werden.

4. Aktivierungs-/Deaktivierungsverfahren nach einem der vorangehenden Ansprüche, wobei die Blockierungskinematik aus einem gleichzeitigen Drehantrieb an der Stelle (25a, 25b) jedes ersten Verbindungsteils (21a, 21b) gebildet ist, der durch einen Translationsantrieb der Einzelsteuerung (5, 25a, 25b) induziert wird.

5. Aktivierungs-/Deaktivierungsverfahren nach einem der vorangehenden Ansprüche, wobei der Drehantrieb an der Stelle (25a, 25b) eines der ersten Verbindungsteile (21a, 21b) durch eine Translation bewirkt wird, die durch die Drehung an der Stelle (25b, 25a) des anderen ersten Verbindungsteils (21b, 21a) mit Einzelsteuerfunktion betätigt wird.

6. Aktivierungs-/Deaktivierungsverfahren nach einem der vorangehenden Ansprüche, wobei der Drehantrieb jeden fest mit der Tür (1) verbundenen ersten Verbindungsteil (21a, 21b) zwischen zwei Winkelpositionen, einer Verriegelungsposition im zweiten Teil (22a, 22b) gemäß einer blockierenden Gestaltung und einer lösbaren Position, in der der erste (21a, 21b) und der zweite (22a, 22b) Teil jedes Verbindungsmechanismus (2) komplementäre Gestaltungen aufweisen.

7. Aktivierungs-/Deaktivierungsverfahren nach einem der vorangehenden Ansprüche, wobei die Winkelpositionen der ersten Teile der Verbindungsmechanismen (21a, 21b) und der einzigen Steuerung (5; 25a, 25b) detektiert werden, um den Aktivierungs-/Deaktivierungszustand der Rutsche (3) zu bestätigen.

8. Anordnung zur Durchführung des Verfahrens nach einem der vorangehenden Ansprüche, mit einem System zum Aktivieren/Deaktivieren der Rutsche (3) einer Flugzeugtür (1), einer mit einem solchen System ausgestatteten Flugzeugtür, einem entsprechenden Flugzeugkabinenboden und zwei lösbaren Verbindungsmechanismen (2) in Verbindung mit der Tür (1) und dem Boden (6), wobei jeder Mechanismus (2) einen lösbaren Verbinder (21a, 21b), der fest mit der Tür (1) verbunden ist und sich senkrecht zum Boden (6) auf jeder Seite eines Türunterteils (1B) erstreckt, und einen am Kabinenboden (6) befestigten Verankerungsbeschlag (22a, 22b) aufweist,
wobei jeder Verbinder (21a, 21b) mit einem elastischen Zentrierer (70) sowie einem Verriegelungs- /Entriegelungsgreifer (25a, 25b) am entsprechenden Verankerungsbeschlag (22a, 22b) ausgestattet ist,
wobei die Verbinder (21a, 21b) durch eine Kopplungsstange (5) von jedem Greifer (25a, 25b) aus verbunden sind, der Mittel zur Befestigung der Kopplungsstange (5) aufweist, und
wobei jeder Greifer (25a, 25b) drehbeweglich ist, wobei einer der Greifer (25a, 25b) durch eine Einzelsteuerung (5; 25a, 25b) angetrieben werden kann, die den anderen Greifer (25a, 25b) über die Kopplungsstange (5) dreht,
wobei das System außerdem eine Energiequelle (14) zum Auslösen der Einzelsteuerung (5; 25a, 25b) jedes Greifers (25a, 25b) zwischen zwei Winkelpositionen aufweist:
- einer Winkelverriegelungsposition, in der jeder Greifer (25a, 25b) und der entsprechende Verankerungsbeschlag (22a, 22b) Prägungen (25i, 22M) in einer blockierenden Gestaltung aufweisen, und
- einer lösbaren Winkelposition, in der jeder Greifer (25a, 25b) und der Verankerungsbeschlag (22a, 22b) Prägungen (25i, 22M) in einer komplementären, nicht blockierenden Gestaltung aufweisen.

9. Anordnung nach dem vorangehenden Anspruch, wobei jeder Greifer (25a, 25b) zwei weibliche Prägungen aufweist, wobei eine obere Prägung (25s) mit einer männlichen Prägung (2M) eines Endstücks (2E) des mit der Tür (1) verbundenen Verbinders (2) gekoppelt werden kann und wobei eine untere Prägung (25i) mit einer männlichen Prägung (22M) des entsprechenden Verankerungsbeschlags (22a, 22b) verbunden werden kann.

10. Anordnung nach Anspruch 8, wobei die Einzelsteuerung durch die Kopplungsstange (5) ausgebildet ist, die mechanisch mit einer Energiequelle (14) gekoppelt ist.

11. Anordnung nach Anspruch 8, wobei die Einzelsteuerung durch einen der Greifer (25a, 25b) der lösbaren Verbinder (21a, 21b) ausgebildet ist, der mechanisch mit einer Energiequelle (14) gekoppelt ist.

12. Anordnung nach einem der Ansprüche 8 bis 11, wobei jeder Verbinder (21a, 21b) ein Rohr (2T) aufweist, das senkrecht zum Kabinenboden (6) in einem Befestigungsträger (7a, 7b) an der Tür (1) montiert ist, wobei das Rohr (2T) im Träger (7a, 7b) durch den elastischen Zentrierer (70) zur Aufnahme von Versätzen zwischen den Verbindern (21a, 21b) und den Verankerungsbeschlägen (22a, 22b) montiert ist.

13. Anordnung nach dem vorangehenden Anspruch, wobei das Rohr (2T) im Träger (7a, 7b) durch den elastischen Zentrierer (70) montiert ist, der dazu in der Lage ist, die Versätze zwischen den Verbindern (21a, 21b) und den Verankerungsbeschlägen (22a, 22b) aufzunehmen.

14. Anordnung nach dem vorangehenden Anspruch, wobei die Positionssensoren (26) an einem das Rohr (2T) verlängernden Kragen (23a, 23b) montiert sind, um die Winkelposition der Verbinder (21a, 21b) und der Steuerung (5) zu bestimmen, um daraus die Position der Greifer (25a, 25b) sowie den Aktivierungs-/Deaktivierungszustand der Rutsche (3) abzuleiten.

15. Anordnung nach einem der Ansprüche 8 bis 14, wobei jeder Greifer (25a, 25b) einen Schenkel aufweist, der als Mittel zur Befestigung der Kopplungsstange (5) dient.

16. Anordnung nach einem der Ansprüche 8 bis 15, wobei ein Zug (2C) ein Ziel jedes Greifers (25a, 25b) bildet, der betätigt werden kann, um die Rutsche (3) im Bedarfsfall zu aktivieren oder zu deaktivieren.

17. Anordnung nach einem der Ansprüche 9 bis 12, wobei jeder Mechanismus (2) ein bistabiles System (8) zum Sichern der beiden Positionen ARMED/DISARMED besitzt.

18. Anordnung nach einem der Ansprüche 9 bis 13, wobei eine Leuchtanzeige den Bediener über den Aktivierungs-/Deaktivierungszustand der Tür informiert.

## Claims

1. Method for arming/disarming a slide (3) of an aeroplane door (1) linked with a cabin floor (6) of the aeroplane, wherein - in arming mode, called ARM - the door (1) is lowered into closed position to engage first connection parts (21a, 21b) of two releasable mechanisms (2) with elastic centring (70) on second connection parts (22a, 22b) of these mechanisms (2), respectively secured to the door (1) and to the cabin floor (6); the first parts (21a, 21b) are locked onto the second parts (22a, 22b) of the mechanisms (2) by a misalignment of respective imprints (25i, 22M) following the simultaneous rotational driving of the first connection parts (21a, 21b) by a translation according to a blocking kinematic triggered by a single control via a coupling bar (5) coupled by attachment means by locking/unlocking grasps (25a, 25b) of the first connection parts (21a, 21b) and actuated by an energy source (14), other imprints (2M, 25s) of the first parts (21a, 21b) being then aligned in a releasable manner; in case of emergency exit, the slide (3) only coupled to each mechanism (2) is unwound and inflated; and - in disarming mode, called DISARM - said mechanisms (2) are unlocked by a mechanical driving (14, 5; 25a, 25b) of release translational and rotational kinematic which unlocks the first parts (21a, 21b) from the second parts (22a, 22b) by an alignment of respective imprints (25i, 22M) and locks the first parts (21a, 21b) to the door (1) by a misalignment of the other imprints (2M, 25s), then to lift the door (1) to uncouple the parts (21a, 21b; 22a, 22b) of the mechanisms (2) before proceeding with the opening thereof.

2. Arming/disarming method according to Claim 1, wherein the second connection parts (22a, 22b) secured to the cabin floor (6) form extenders emerging from the floor (6).

3. Arming/disarming method according to one of Claims 1 and 2, wherein the connection parts (21a, 21b; 22a, 22b) are aligned upon the lowering of the door (1) by a fixing (7a, 7b) of the first connection parts (21a, 21b) secured to the door (1) via the elastic centring (70).

4. Arming/disarming method according to any one of the preceding claims, wherein the blocking kinematic is composed of a simultaneous rotational driving at the level (25a, 25b) of each first connection part (21a, 21b) induced by a translational driving of the single control (5, 25a, 25b).

5. Arming/disarming method according to one of the preceding claims, wherein the rotational driving at the level (25a, 25b) of one of the first connection parts (21a, 21b) is performed by a translation actuated by the rotation at the level (25b, 25a) of the other first connection part (21b, 21a) having a single control function.

6. Arming/disarming method according to one of the preceding claims, wherein the rotational driving makes each first connection part (21a, 21b) secured to the door (1) pivot partially between two angular positions, a locking position in the second part (22a, 22b) according to a blocking conformation, and a releasable position in which the first (21a, 21b) and second (22a, 22b) parts of each connection mechanism (2) have complementary conformations.

7. Arming/disarming method according to one of the preceding claims, the angular positions of the first parts of connection mechanisms (21a, 21b) and of the single control (5; 25a, 25b) are detected to confirm the arming/disarming state of the slide (3).

8. Assembly for implementing the method according to any one of the preceding claims, comprising a system for arming/disarming a slide (3) of an aeroplane door (1), an aeroplane door equipped with such a system, a corresponding aeroplane cabin floor and two releasable connection mechanisms (2) linked with the door (1) and the floor (6), wherein each mechanism (2) comprises a releasable connector (21a, 21b) secured to the door (1) extending at right angles to the floor (6) on each side of a door bottom (1B), and an anchoring fitting (22a, 22b) fixed to the cabin floor (6), wherein each connector (21a, 21b) is equipped with an elastic centring piece (70) and a locking/unlocking grab (25a, 25b) on the corresponding anchoring fitting (22a, 22b), the connectors (21a, 21b) being linked by a coupling bar (5) from each grab (25a, 25b) which has attachment means for the coupling bar (5), and wherein each grab (25a, 25b) being movable in rotation, one of the grabs (25a, 25b) can be driven by a single control (5; 25a, 25b) which drives the other grab (25a, 25b) in rotation via the coupling bar (5), the system also comprising an energy source (14) for triggering the single control (5; 25a, 25b) of each grab (25a, 25b) between two angular positions:
an angular locking position in which each grab (25a, 25b) and the corresponding anchoring fitting (22a, 22b) have imprints (25i, 22M) in blocking conformation, and
- a releasable angular position in which each grab (25a, 25b) and the anchoring fitting (22a, 22b) have imprints (25i, 22M) in non-blocking complementary conformation.

9. Assembly according to the preceding claim, wherein each grab (25a, 25b) has two female imprints, a top imprint (25s) that can be coupled to a male imprint (2M) of an end piece (2E) of the connector (2) linked to the door (1), and a bottom imprint (25i) that can be connected to a male imprint (22M) of the corresponding anchoring fitting (22a, 22b).

10. Assembly according to Claim 8, wherein the single control is composed of the coupling bar (5) coupled mechanically to an energy source (14).

11. Assembly according to Claim 8, wherein the single control is composed of one of the grabs (25a, 25b) of the releasable connectors (21a, 21b) coupled mechanically to an energy source (14).

12. Assembly according to any one of Claims 8 to 11, wherein each connector (21a, 21b) comprises a tube (2T) mounted at right angles to the cabin floor (6) in a fixing support (7a, 7b) of the door (1), the tube (2T) being mounted in the support (7a, 7b) through the elastic centring piece (70) for absorption of the misalignments between the connectors (21a, 21b) and the anchoring fittings (22a, 22b).

13. Assembly according to the preceding claim, wherein the tube (2T) is mounted in the support (7a, 7b) through the elastic centring piece (70) capable of absorbing the misalignments between the connectors (21a, 21b) and the anchoring fittings (22a, 22b).

14. Assembly according to the preceding claim, wherein position sensors (26) are mounted on a collar (23a, 23b) extending the tube (2T) in order to determine the angular position of the connectors (21a, 21b) and of the control (5) to deduce therefrom the position of the grabs (25a, 25b) and the arming/disarming state of the slide (3).

15. Assembly according to any one of Claims 8 to 14, wherein each grab (25a, 25b) has a branch serving as means for attachment of the coupling bar (5).

16. Assembly according to any one of Claims 8 to 15, wherein a drawbar (2C) forms a target of each grab (25a, 25b) capable of being manoeuvred to arm or disarm the slide (3) in case of need.

17. Assembly according to any one of Claims 9 to 12, wherein each mechanism (2) has a bistable system (8) in order to secure the two armed/disarmed positions.

18. Assembly according to any one of Claims 9 to 13, wherein a light indicator informs the operator of the arming/disarming status of the door.
